# EUROPÄISCHE PATENTANMELDUNG

(11) **EP 1 134 706 A2**
(43) Veröffentlichungstag der Anmeldung: **19.09.2001**
(21) Anmeldenummer: 01890083.7
(22) Anmeldetag: 16.03.2001
(51) Int. Cl.: G07F 7/00, G06F 17/60

(54) **System zur Fernbonierung von Bestellungen**

(30) Priorität: 16.03.2000 AT 4292000
(71) Anmelder: TBT Technisches Büro für Elektronik Gesellschaft m.b.H., 1230 Wien (AT)
(72) Erfinder: Lausch-Tichawa, Michael, 1230 Wien (AT)
(74) Vertreter: Gibler, Ferdinand, Dipl.Ing. Dr. techn.

(57) **Zusammenfassung**

System zur Fern-Bonierung von Bestellungen, z.B. Speisen, Getränke o.ä., mit zumindest einer tragbaren Eingabe-Einheit (2) zur Eingabe von Bestellungen, einer mit dieser verbundenen, tragbaren Sende-Einheit (1), einer mit der Sende-Einheit (1) über einen Übertragungskanal (12) verbindbaren Empfangs-Einheit (9) und einer mit der Empfangs-Einheit (9) verbundenen zentralen Bonierungs-Einheit (11), wobei mittels der Eingabe-Einheit (2) eingegebene Bestellungen über die Sende-Einheit (1) und die Empfangs-Einheit (9) zur zentralen Bonierungs-Einheit (11) übertragbar sind, und wobei die zumindest eine Eingabe-Einheit durch ein Mikrophon (2) gebildet ist, und eine Sprachanalyse-Einheit (10) vorgesehen ist, über welche die in das Mikrophon (2) gesprochenen Anweisungen auswertbar und in Befehle für die zentrale Bonierungs-Einheit (11) wandelbar sind.

## Beschreibung

Die Erfindung betrifft ein System zur Fern-Bonierung von Bestellungen, z.B. Speisen, Getränke o.ä., mit zumindest einer tragbaren Eingabe-Einheit zur Eingabe von Bestellungen, einer mit dieser verbundenen, tragbaren Sende-Einheit, einer mit der Sende-Einheit über einen Übertragungskanal verbindbaren Empfangs-Einheit und einer mit der Empfangs-Einheit verbundenen zentralen Bonierungs-Einheit, wobei mittels der Eingabe-Einheit eingegebene Bestellungen über die Sende-Einheit und die Empfangs-Einheit zur zentralen Bonierungs-Einheit übertragbar sind.

Früher erfolgte die Bonierung von Bestellungen hauptsächlich durch Eingabe in eine Registrierkasse oder durch Eingabe in eine Getränkeausschank-Einrichtung. Um dem Bedienungspersonal die Wege von und zur Registrierkasse zu ersparen, wurden Funk-Eingabe-Einheiten entwickelt, mit deren Hilfe die Bonierungen über eine Funk-Übertragungsstrecke innerhalb einer Gaststätte an die Registrierkasse gesendet werden konnten.

Ein Nachteil dieser Funk-Eingabe-Einheiten besteht darin, daß es zu deren Bedienung beider Hände des Bestellenden bedarf, wobei eine Hand die Eingabe-Einheit hält und die Bedienung der Tasten mit der anderen Hand erfolgt. Aufgrund der in den meisten Fällen relativ klein gehaltenen Tastatur ergibt sich darüber hinaus für Bestellende mit groß geratenen Händen oder schlechtem Nah-Sehvermögen eine relativ unbequeme Handhabung. Die Bedienung der bekannten Funk-Eingabe-Einheiten stellt außerdem für ältere oder mit der Anwendung moderner Technologie weniger vertraute Personen oftmals eine große Schwierigkeit dar.

Aufgabe der Erfindung ist es daher, ein Fern-Bonierungssystem der eingangs genannten Art anzugeben, bei dem die Bestellung rasch und ohne aufwendige händische Eingabe vorgenommen werden kann.

Weitere Aufgabe ist es, ein Fern-Bonierungssystem anzugeben, das während der Bestellungsaufgabe die Weiterverfolgung anderer Aktivitäten ermöglicht und das einen hohen Grad an Fehlersicherheit gewährleistet.

Erfindungsgemäß wird dies dadurch erreicht, daß die zumindest eine Eingabe-Einheit durch ein Mikrophon gebildet ist, und daß eine Sprachanalyse-Einheit vorgesehen ist, über welche die in das Mikrophon gesprochenen Anweisungen auswertbar und in Befehle für die zentrale Bonierungs-Einheit wandelbar sind.

Bei Anwendung in einer Gaststätte wird das Bedienungspersonal mit einem Mikrophon ausgestattet, über welches die Bestellungen boniert werden können. Über die Sprachanalyse-Einheit kann erkannt werden, für welchen Tisch der Gaststätte eine bestimmte Ware oder ein bestimmtes Getränk bestellt worden ist.

Auf diese Weise ist eine händische Eingabe der Bestellungen nicht mehr erforderlich, wodurch während der Zeitspanne, in der die Bestellung oder sonstige Anweisungen in das Mikrophon gesprochen werden, bereits andere Tätigkeiten mit zumindest einer Hand ausgeführt werden können. Die Bestellung kann unabhängig von der Geschicklichkeit der bestellenden Person bei der Bedienung von händisch betätigbaren Eingabe-Einheiten rasch und zuverlässig durchgeführt werden.

In weiterer Ausbildung der Erfindung kann das Mikrophon eine Ansteck- oder Umhängevorrichtung aufweisen.

Dadurch kann das Mikrophon am Anzug eines Kellners befestigt oder um dessen Hals gehängt werden und es kann in das Mikrophon, ohne dieses halten zu müssen, gesprochen werden.

Gemäß einer weiteren Ausführungsform der Erfindung kann die zentrale Bonierungs-Einheit durch einen zentralen Rechner gebildet sein, der mit der Sprachanalyse-Einheit verbunden ist.

Damit kann die in Steuerbefehle umgewandelte Sprachinformation unmittelbar vom zentralen Rechner bearbeitet werden.

Weiters kann vorgesehen sein, daß der Übertragungskanal zwischen der Sende-Einheit und der Empfangs-Einheit durch einen Funk-Übertragungskanal gebildet ist. Die Übermittlung der Bestellung oder sonstiger Anweisungen kann damit im wesentlichen ungehindert durch Mauerwerk der Gaststätte oder sonstige Hindernisse hindurch vorgenommen werden.

Eine andere Variante der Erfindung kann darin bestehen, daß der Übertragungskanal zwischen der Sende-Einheit und der Empfangs-Einheit durch einen Infrarot-Übertragungskanal gebildet ist. Diese Form der Übertragung ist für kleinere, leicht übersehbare Räumlichkeiten wegen des geringen apparativen Aufwands und wegen des relativ geringen Energieverbrauchs vorteilhaft.

Eine andere Weiterbildung der Erfindung kann darin bestehen, daß der zentrale Rechner mit einer in einer Ausgabestelle für Bestellungen angeordneten Bon-Anzeige und/oder einem Bon-Drucker verbunden ist.

Die Bestellungen werden in der Ausgabestelle der Gaststätte, z.B. in einer Küche, in Form von Bons ausgewiesen und können zugleich auch auf einer Anzeige angezeigt werden, um eine ständige Kontrolle der bereits entgegengenommenen Bestellungen zu ermöglichen.

Gemäß einem weiteren Merkmal der Erfindung kann der zentrale Rechner mit einer Getränkeausschank-Einrichtung verbunden sein, über welche entsprechend den in das Mikrophon gesprochenen Anweisungen Getränke zur Ausschank freigebbar sind.

Eine Fernbonierung eines Getränks mit Hilfe des Mikrophons kann auf diese Weise in einen Kellnerkredit übergeführt werden, sodaß aufgrund der Bestellung die sonst gesperrte Entnahme eines Getränks aus der Ausschank-Einrichtung durch den Kellner ermöglicht wird.

Eine weitere Ausführungsform der Erfindung kann darin bestehen, daß der zentrale Rechner mit einem Rechnungs-Drucker verbunden ist, über welchen entsprechend den in das Mikrophon gesprochenen Anweisungen eine Rechnung ausdruckbar ist.

Auf diese Weise kann von dem Tisch, von dem aus eine Bestellung aufgegeben worden ist, durch Anweisung des Bedienpersonals auch eine Rechnung auf einem Rechnungs-Drucker ausgedruckt werden, wodurch sich eine weitere Zeitersparnis erzielen läßt, da das Bedienpersonal zumindest einen Weg zur Kasse einsparen kann.

Zur Vereinfachung der Verrechung von Bestellungen kann der zentrale Rechner über ein Verzeichnis an Bestell-Tischen verfügen und jedem Bestell-Tisch ein Konto zugeordnet sein.

Die bei undeutlicher oder unpräziser Formulierung der Bestellungen auftretenden Fehlbewertungen durch die Sprachanalyse-Einheit können in weiterer Ausbildung der Erfindung dadurch verhindert werden, daß der Übertragungskanal bidirektional ausgebildet ist, und daß mittels einer mit der zentralen Bonier-Einheit verbundenen weiteren Sende-Einheit eine Bestätigungsmeldung über den bidirektionalen Übertragungskanal an eine weitere Empfangs-Einheit übertragbar ist, an die eine im Bereich des Mikrophons angeordnete Wiedergabe-Vorrichtung, insbesondere ein Lautsprecher angeschlossen ist.

Dabei kann die Bestätigungsmeldung aus einem Signalton gebildet sein, der über den Lautsprecher ausgebbar ist. Sobald der Signalton über den Lautsprecher wiedergegeben wird, weiß das Bedienpersonal, daß die Anweisung erkannt und weitergegeben worden ist.

Eine weitere Variante der Erfindung kann darin bestehen, daß die Bestätigungsmeldung aus einem mittels Sprachprozessor erzeugten Sprachsignal gebildet ist, das über den Lautsprecher ausgebbar ist.

Das Sprachsignal kann entweder aus der Mitteilung bestehen, daß die an die Bonier-Einheit gesendete Anweisung verstanden worden ist oder es kann die Anweisung wortwörtlich über den Lautsprecher wiederholt werden, damit das Bedienpersonal die Möglichkeit der Überprüfung der richtigen Bewertung des übertragenen Sprachsignals in der Sprachanalyse-Einheit hat.

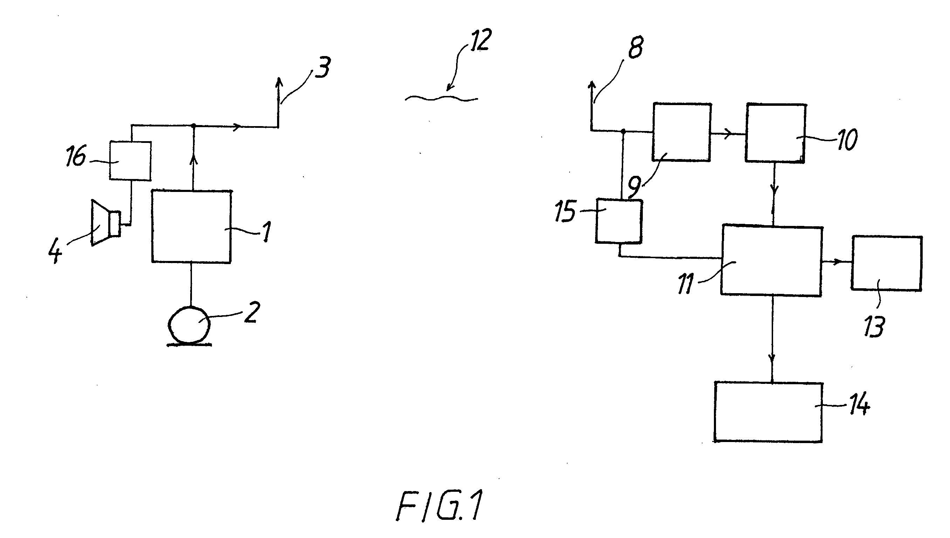

Nachfolgend wird die Erfindung anhand des in der beigeschlossenen Zeichnung dargestellten Ausführungsbeispiels eingehend erläutert. Es zeigt dabei Fig.1 ein Blockschaltbild einer Ausführungsform des erfindungsgemäßen Systems.

Fig. 1 zeigt ein System zur Fern-Bonierung von Bestellungen, z.B. Speisen, Getränke o.ä., wie es z.B. in Gastronomiebetrieben Anwendung findet. Der Einfachheit halber ist das System nur für eine bestellende Person dargestellt, es können aber je nach Auslegung des Systems beliebig viele bestellende Personen an das System angeschlossen sein.

Eine zentrale Bonier-Einheit 11 ist mit einer Empfangs-Einheit 9 verbunden, die über einen Übertragungskanal 12 mit einer tragbaren Sende-Einheit 1 verbindbar ist. Der Übertragungskanal 12 ermöglicht die drahtlose Übertragung von Information und ist im Ausführungsbeispiel gemäß Fig. 1 als Funk-Übertragungskanal ausgebildet, wobei das von der Sende-Einheit 1 auf der Seite des Bestellers, z.B. eines Kellners, ausgehende Signal über eine Antenne 3 zu einer Antenne 8 auf der Seite der zentralen Bonier-Einheit 11 gesendet und dort empfangen wird. Das von der Antenne 8 gebildete Empfangssignal wird an die Empfangs-Einheit 9 weitergeleitet und dort entsprechend gewandelt. Der Übertragungskanal 12 kann jedoch genauso als Infrarot-Übertragungskanal ausgebildet sein. Aufgabe der Bonier-Einheit 11 ist es, die vom Kellner aufgegebenen Bestellungen in Empfang zu nehmen und weiterzuleiten, damit die Zubereitung und die Ausgabe der bestellten Speisen und Getränke veranlaßt werden kann. Durch die Fern-Bonierung bleibt es dem Kellner erspart, sich in die Küche oder zur Ausschank zu begeben und er kann die dabei eingesparte Zeit für die Entgegennahme weiterer Bestellungen verwenden.

Die tragbare Sende-Einheit 1 ist mit einer tragbaren Eingabe-Einheit 2 zur Eingabe von Bestellungen verbunden, wobei mittels der Eingabe-Einheit 2 eingegebene Bestellungen über die Sende-Einheit 1 und die Empfangs-Einheit 9 zur zentralen Bonierungs-Einheit 1 übertragbar sind.

Erfindungsgemäß ist vorgesehen, daß die Eingabe-Einheit durch ein Mikrophon 2 gebildet und eine Sprachanalyse-Einheit 10 vorgesehen ist, über welche die in das Mikrophon 2 gesprochenen Anweisungen auswertbar und in Befehle für die zentrale Bonierungs-Einheit 11 wandelbar sind, welche vorzugsweise durch einen zentralen Rechner 11 gebildet ist, der mit der Sprachanalyse-Einheit 10 verbunden ist.

Auf diese Weise muß der Kellner die ihm mitgeteilten Bestellungen nicht handschriftlich notieren oder in eine Tastatur eingeben, sondern kann diese direkt in das Mikrophon 2 sprechen, welches vorzugsweise eine nicht dargestellte Ansteck- oder Umhängevorrichtung aufweist, die es ihm ermöglicht, beide Hände für Serviertätigkeiten freizuhalten.

Bei Eingabe der Bestellung wird das vom Kellner ausgehende akustische Signal mit Hilfe des Mikrophons 2 in ein elektrisches Sprachsignal gewandelt und an die Sende-Einheit 1 weitergeleitet. In dieser wird das Signal in seiner analogen Form oder nach entsprechender Digitalisierung zu einem Sendesignal gewandelt, das über die Antenne 3 abgestrahlt wird. Die im selben Raum oder in der näheren Umgebung befindliche Antenne 8 empfängt das Sendesignal und leitet es an die Empfangs-Einheit 9 weiter, wo das ursprüngliche Sprachsignal rückgewonnen wird. Das analoge oder digitale Sprachsignal wird in der Sprachanalyse-Einheit 10 ausgewertet und die Anweisungen des Kellners auf Basis dieser Auswertung in Befehle zur Steuerung der zentralen Bonier-Einheit 11 ungewandelt.

Zur Weitergabe der vom Kellner gesprochenen Anweisung ist der zentrale Rechner 11 mit einer in einer Ausgabestelle für Bestellungen, z.B. einer Küche, einer Bar, o.ä. angeordneten Bon-Anzeige und/oder einem Bon-Drucker 13 verbunden. Der auf diese Weise an das Küchenpersonal oder an die Ausschankkräfte mitgeteilte Auftrag kann sogleich bearbeitet werden, während der Kellner sich noch bei einem Gästetisch befindet.

Weiters ist der zentrale Rechner 11 mit einer Getränkeausschank-Einrichtung 14 verbunden, über welche entsprechend den in das Mikrophon 2 gesprochenen Anweisungen Getränke zur Ausschank freigegeben werden können. Die Bonierung von über die Getränkeauschank-Einrichtung 14 bereitgestellten Getränke können dabei in einen Kellner-Kredit übergeführt werden, sodaß aufgrund der Bestellung die sonst gesperrte Entnahme möglich ist.

Der Kellner kann durch in das Mikrophon 2 gesprochene Anweisungen auch das Ausdrucken einer Tischrechnung veranlassen. Zu diesem Zweck ist der zentrale Rechner 11 mit einem nicht dargestellten Rechnungs-Drucker verbunden, über den eine entsprechende Rechnung ausgedruckt werden kann.

Schließlich kann der zentrale Rechner 11 über ein Verzeichnis an Bestell-Tischen verfügen und es kann jedem Bestell-Tisch ein Konto zugeordnet sein.

Um sicherzustellen, daß die Umwandlung der Anweisungen des Kellners in Steuerbefehle von der Sprachanalyse-Einheit 10 richtig vorgenommen worden ist, besteht die Möglichkeit den Übertragungskanal 12 bidirektional auszubilden und eine Bestätigungsmeldung an den Kellner zu senden.

Über eine mit der zentralen Bonier-Einheit 11 verbundene weitere Sende-Einheit 15 kann die Bestätigungsmeldung über den bidirektionalen Übertragungskanal 12 an eine weitere Empfangs-Einheit 16 übertragen werden, an die eine im Bereich des Mikrophons 2 angeordnete Wiedergabe-Vorrichtung, hier ein Lautsprecher 4, angeschlossen ist.

Die gesendete Bestätigungsmeldung kann aus einem über den Lautsprecher abgegebenen Signalton bestehen oder die zentrale Bonier-Einheit 11 bildet den empfangenen Befehl über einen Sprachprozessor nach und sendet die entsprechende Anweisungen in Form eines generierten Sprachsignals an die Empfangs-Einheit 16 zurück, sodaß sie der Kellner über den Lautsprecher 4 abhören und überprüfen kann. Bei Fehlmeldungen können die jeweiligen Anweisungen noch einmal in das Mikrophon 2 gesprochen werden.

## Patentansprüche

1. System zur Fern-Bonierung von Bestellungen, z.B. Speisen, Getränke o.ä., mit zumindest einer tragbaren Eingabe-Einheit zur Eingabe von Bestellungen, einer mit dieser verbundenen, tragbaren Sende-Einheit, einer mit der Sende-Einheit über einen Übertragungskanal verbindbaren Empfangs-Einheit und einer mit der Empfangs-Einheit verbundenen zentralen Bonierungs-Einheit, wobei mittels der Eingabe-Einheit eingegebene Bestellungen über die Sende-Einheit und die Empfangs-Einheit zur zentralen Bonierungs-Einheit übertragbar sind, **dadurch gekennzeichnet, daß** die zumindest eine Eingabe-Einheit durch ein Mikrophon (2) gebildet ist, und daß eine Sprachanalyse-Einheit (10) vorgesehen ist, über welche die in das Mikrophon (2) gesprochenen Anweisungen auswertbar und in Befehle für die zentrale Bonierungs-Einheit (11) wandelbar sind.

2. System nach Anspruch 1, **dadurch gekennzeichnet, daß** das Mikrophon (2) eine Ansteck- oder Umhängevorrichtung aufweist.

3. System nach Anspruch 1 oder 2, **dadurch gekennzeichnet, daß** die zentrale Bonierungs-Einheit durch einen zentralen Rechner (11) gebildet ist, der mit der Sprachanalyse-Einheit (10) verbunden ist.

4. System nach Anspruch 1, 2 oder 3, **dadurch gekennzeichnet, daß** der Übertragungskanal zwischen der Sende-Einheit (1) und der Empfangs-Einheit (9) durch einen Funk-Übertragungskanal (12) gebildet ist.

5. System nach Anspruch 1, 2 oder 3, **dadurch gekennzeichnet, daß** der Übertragungskanal zwischen der Sende-Einheit (1) und der Empfangs-Einheit (9) durch einen Infrarot-Übertragungskanal gebildet ist.

6. System nach einem der Ansprüche 3 bis 5, **dadurch gekennzeichnet, daß** der zentrale Rechner (11) mit einer in einer Ausgabestelle für Bestellungen angeordneten Bon-Anzeige und/oder einem Bon-Drucker (13) verbunden ist.

7. System nach einem der Ansprüche 3 bis 6, **dadurch gekennzeichnet, daß** der zentrale Rechner (11) mit einer Getränkeausschank-Einrichtung (14) verbunden ist, über welche entsprechend den in das Mikrophon (2) gesprochenen Anweisungen Getränke zur Ausschank freigebbar sind.

8. System nach einem der Ansprüche 3 bis 7, **dadurch gekennzeichnet, daß** der zentrale Rechner (11) mit einem Rechnungs-Drucker verbunden ist, über welchen entsprechend den in das Mikrophon (2) gesprochenen Anweisungen eine Rechnung ausdruckbar ist.

9. System nach einem der Ansprüche 3 bis 8, **dadurch gekennzeichnet, daß** der zentrale Rechner (11) über ein Verzeichnis an Bestell-Tischen verfügt, und daß jedem Bestell-Tisch ein Konto zugeordnet ist.

10. System nach einem der Ansprüche 1 bis 9, **dadurch gekennzeichnet, daß** der Übertragungskanal (12) bidirektional ausgebildet ist, und daß mittels einer mit der zentralen Bonier-Einheit (11) verbundenen weiteren Sende-Einheit (15) eine Bestätigungsmeldung über den bidirektionalen Übertragungskanal (12) an eine weitere Empfangs-Einheit (16) übertragbar ist, an die eine im Bereich des Mikrophons (2) angeordnete Wiedergabe-Vorrichtung, insbesondere ein Lautsprecher (4), angeschlossen ist.

11. System nach Anspruch 10, **dadurch gekennzeichnet, daß** die Bestätigungsmeldung aus einem Signalton gebildet ist, der über den Lautsprecher (4) ausgebbar ist.

12. System nach Anspruch 10, **dadurch gekennzeichnet, daß** die Bestätigungsmeldung aus einem mittels Sprachprozessor erzeugten Sprachsignal gebildet ist, das über den Lautsprecher (4) ausgebbar ist.
